# EUROPEAN PATENT APPLICATION

(11) **EP 3 831 775 A1**
(43) Date of publication of application: **09.06.2021**
(21) Application number: 19843349.2
(22) Date of filing: 29.07.2019
(51) Int. Cl.: C01B 32/21, C01B 21/064, C01B 32/194, C01B 32/225, C08K 7/00, C08K 9/04, C08L 101/00, C09K 3/00

(54) **COMPOSITE MATERIAL**

(30) Priority: 30.07.2018 JP 2018142983
(71) Applicant: ADEKA CORPORATION, Arakawa-ku Tokyo 116-8554 (JP)
(72) Inventor: YOKOTA, Hideyuki, Tokyo 116-8554 (JP); NOHARA, Yuta, Tokyo 116-8554 (JP); SAIKI, Tomoaki, Tokyo 116-8554 (JP); TANIUCHI, Ryo, Tokyo 116-8554 (JP); YANO, Toru, Tokyo 116-8554 (JP)
(74) Representative: Forstmeyer, Dietmar
(86) International application number: PCT/JP2019/029625
(87) International publication number: WO 2020/027039

(57) **Abstract**

Provided is an exfoliated layered substance that has favorable dispersibility when added to a resin or the like and has an effect of significantly improving the properties of the resin or the like. The present invention provides a composite material in which the surface of an exfoliated layered substance is coated with a coating substance, wherein the coating substance is at least one substance selected from the group consisting of an antioxidant, a UV absorber, a hindered amine light stabilizer, a flame retardant, a plasticizer, a lubricant, a surfactant, a polyoxypropylene compound, a radically polymerized polymer having a hydrophilic unit and a hydrophobic unit, a process oil, and a quaternary ammonium salt compound, and the coating substance is contained in an amount of 0.1 to 100 parts by mass, with respect to 100 parts by mass of the exfoliated layered substance.

## Description

### Technical Field

The present invention relates to a composite material in which the surface of an exfoliated layered substance is coated with a coating substance.

### Background Art

Exfoliated graphite such as graphene obtained by exfoliating graphite, which is a layered substance, is used as a conductive assistant for electrodes of secondary batteries (see Patent Literature 1, for example), a conductive ink (see Patent Literature 2, for example), a filler for resins and elastomers (see Patent Literatures 3 and 4, for example), a gas barrier material (see Patent Literatures 5 and 6, for example), or the like. Exfoliating a layered substance results in a reduction in the thickness of the layered substance. The smaller the number of layers is, the more likely the layered substance is to aggregate, and the lower the dispersibility in a matrix is. Due to this problem, there are cases where sufficient properties cannot be obtained. In order to improve the aggregation properties and the dispersibility in a solvent or the like, exfoliated graphite (see Patent Literature 7, for example) whose surface is coated with a polymer such as polyvinyl alcohol has been studied, but a sufficient effect in improving dispersibility when added to a resin or the like is not obtained.

### Citation List

### Patent Literature

Patent Literature 1: JP 2016-060887A
Patent Literature 2: US 2016101980 (A1)
Patent Literature 3: US 2012301707 (A1)
Patent Literature 4: US 2013296479 (A1)
Patent Literature 5: US 2014272350 (A1)
Patent Literature 6: US 2018186954 (A1)
Patent Literature 7: US 2016200580 (A1)

### Summary of Invention

### Problems to be Solved by the Invention

An object of the present invention is to provide an exfoliated layered substance that has favorable dispersibility when added to a resin or the like and provides a great effect of improving the properties of the resin or the like.

### Means for Solving the Problems

The inventors of the present invention have conducted in-depth study regarding the above-described object and found that it is possible to achieve the above-described object by coating the surface of an exfoliated layered substance with a specific substance, and the present invention was thus completed. That is to say, the present invention provides a coating substance is at least one substance selected from the group consisting of an antioxidant, a UV absorber, a hindered amine light stabilizer, a flame retardant, a plasticizer, a lubricant, a surfactant, a polyoxypropylene compound, a radically polymerized polymer having a hydrophilic unit and a hydrophobic unit, a process oil, and a quaternary ammonium salt compound, and the coating substance is contained in an amount of 0.1 to 100 parts by mass with respect to 100 parts by mass of the exfoliated layered substance.

Also, the present invention provides a resin composition containing the above-described composite material and a synthetic resin.

### Advantageous Effects of Invention

The present invention improves dispersibility of an exfoliated layered substance in a resin or the like and thereby significantly improves the properties, such as impact resistance, of the resin or the like.

### Description of Embodiments

### Exfoliated Layered Substance

A composite material of the present invention contains an exfoliated layered substance. A layered substance has a layered structure in which unit layers individually formed through strong bonding, such as covalent or ionic bonding, are stacked together mainly via weak van der Waals forces. Graphites, boron nitrides, transition metal dichalcogenides, group 13 chalcogenides, group 14 chalcogenides, bismuth chalcogenides, layered metal halides, layered transition metal oxides, layered perovskite oxides, clay minerals, layered silicates, and the like may be used as the layered substance. In the present invention, it is preferable to use a graphite or a boron nitride as the layered substance, because a composite material having even more favorable dispersibility can be obtained.

The graphites are layered compounds that have unit layers made of carbon. The graphites include graphite, as well as expanded graphite in which the interlayer spacing of graphite is expanded, and graphite oxide obtained by oxidizing graphite using an oxidizing agent.

The boron nitrides are layered substances that contain nitrogen and boron as constituent elements, and include boron nitride (BN), boron carbon nitride (BCN), and the like.

The transition metal dichalcogenides are layered substances made of a transition metal and a chalcogen, and are represented by the formula MX₂, where M is a transition metal and X is a chalcogen. Titanium, zirconium, hafnium, vanadium, niobium, chromium, molybdenum, tungsten, technetium, rhenium, nickel, tin, palladium, and platinum may be used as the transition metal. Sulfur, selenium, and tellurium may be used as the chalcogen. Examples of the transition metal dichalcogenides include TiS₂, TiSe₂, TiTe₂, HfS₂, HfSe₂, HfTe₂, VTe₂, VSe₂, NbS₂, NbSe₂, NbTe₂, MoS₂, MoSe₂, MoTe₂, WS₂, WSe₂, WTe₂, TcS₂, ReSe₂, ReS₂, ReTe₂, TaS₂, TaSe₂, TaTe₂, and PtTe₂.

The group 13 chalcogenides are layered substances made of gallium or indium, which are group 13 elements, and the above-described chalcogen, and include GaS, GaSe, GaTe, InSe, and the like.

The group 14 chalcogenides are layered substances made of germanium, tin, or lead, which are group 14 elements, and the above-described chalcogen, and include GeS, SnS₂, SnSe₂, PbO, and the like.

The bismuth chalcogenides are layered substances made of bismuth and the above-described chalcogen, and include Bi₂Se₃, Bi₂Te₃, and the like.

The layered metal halides are layered substances made of a metal element and a halogen, and include MgBr₂, CdCl₂, CdI₂, AgF₂, AsI₃, AlCl₃, and the like.

The layered transition metal oxides are layered substances made of an oxide or an oxyacid of a transition metal such as titanium, manganese, molybdenum, niobium, and vanadium, and include MoO₃, Mo₁₈O₅₂, V₂O₅, LiNbO₂, K₂Ti₂O₅, K₂Ti₄O₉, KTiNbO₅, and the like.

The layered metal phosphates are layered phosphates of titanium, zirconium, selenium, tin, zirconium, aluminum, and the like, and include Ti(HPO₄)₂, Ce(HPO₄)₂, Zr (HPO₄)₂, AlH₂P₃O₁₀, and the like.

The layered perovskite oxides include KCa₂Nb₃O₁₀, KSr₂Nb₃O₁₀, KLaNb₂O₇, and the like.

Examples of the clay minerals or the layered silicates include smectites such as montmorillonite, nontronite, and saponite; kaolin, pyrophyllite, talc, vermiculite, micas, brittle micas, chlorite, sepiolite, palygorskite, imogolite, allophane, hisingerite, magadiite, and kanemite.

The term "exfoliated layered substance" refers to a substance that is obtained by exfoliating a layered substance and has a layered structure having one layer to several thousand unit layers of the layered substance stacked together. The smaller the number of layers of the exfoliated layered substance is, and hence the smaller the thickness of the exfoliated layered substance is, the more likely the exfoliated layered substance is to aggregate, but the greater the property-improving effect provided by the exfoliated layered substance is. From this viewpoint and the viewpoint of achieving excellent economic efficiency, it is preferable that the average thickness of the exfoliated layered substance is 0.3 to 1,200 nm, more preferably 1.5 to 400 nm, and most preferably 3 to 200 nm.

In the present invention, the thickness of the exfoliated layered substance means the thickness in a direction that is perpendicular to the layer-stacking plane of the exfoliated layered substance, and the average thickness of the exfoliated layered substance means the average value of the thicknesses of thirty or more arbitrary pieces of the exfoliated layered substance. The thickness of the exfoliated layered substance can be measured by, for example, using an SEM image of the exfoliated layered substance that has been captured by a scanning electron microscope. Note that the thickness of the exfoliated layered substance is minimized when it consists of a single unit layer. The minimum thickness varies depending on the exfoliated layered substance, and is considered to be approximately 1 nm. For example, of exfoliated layered substances derived from graphite, an exfoliated layered substance consisting of a single unit layer is called graphene and theoretically has a thickness of about 0.335 nm.

If the area of the exfoliated layered substance is small, a sufficient property-improving effect may not be obtained. Therefore, it is preferable that the exfoliated layered substance has a large area. However, if the area is excessively large, the exfoliation takes a lot of time and effort. For this reason, it is preferable that the average area of the exfoliated layered substance is 0.1 to 500 µm², more preferably 0.5 to 300 µm², even more preferably 1.0 to 130 µm², and particularly preferably 1.0 to 30 µm². In the present invention, the area of the exfoliated layered substance means the area of the exfoliated layered substance when seen in a plan view, and the average area means the average value of the areas of fifty or more arbitrary pieces of the exfoliated layered substance. The area of the exfoliated layered substance can be measured by, for example, using an image that is obtained by dropping a dilute dispersion of the exfoliated layered substance onto filter paper and imaging the exfoliated layered substance using a microscope.

There is no particular limitation on the method for exfoliating a layered substance, and the exfoliation can be performed by applying a shear force, ultrasonic vibrations, cavitation, or the like to a layered substance using a known apparatus. Examples of such an apparatus include stirred media mills, such as a sand mill, an attritor, and a bead mill; container-driven mills that use balls or rods as the media, such as a rotary mill, a vibration mill, and a planetary mill; a jet mill, a roll mill, a hammer mill, a pin mill, a high-pressure emulsifying machine, and an ultrasonic emulsifying machine. Examples of the high-pressure emulsifying machine include a flow-through-type high-pressure emulsifying machine and a collision-type high-pressure emulsifying machine. Examples of the form of the flow-through system of the flow-through-type high-pressure emulsifying machine include a single-nozzle form and a slit-nozzle form. Examples of the form of the collision system of the collision-type high-pressure emulsifying machine include a form in which a liquid containing the raw material is made to collide with a flat surface of a valve or the like, or a spherical surface of a ball or the like, and a form in which liquids containing the raw material are made to collide with each other.

When exfoliating the layered substance, either a wet exfoliation method that uses a solvent or a dry exfoliation method that does not use a solvent may be used, and the wet exfoliation method or the dry exfoliation method can be selected in accordance with the exfoliation method of the individual apparatus.

As the solvent used in the wet exfoliation method, it is preferable to use alcoholic solvents such as methanol, ethanol, isopropanol, ethylene glycol, propylene glycol, and methoxyethanol; ketonic solvents such as acetone and methyl ethyl ketone; heterocyclic solvents such as pyridine, piperidine, morpholine, tetrahydrofuran, and dioxane; ionic liquids such as 1-ethyl-3-methylimidazolium tetrafluoroborate and 1-butyl-3-methylimidazolium hexafluorophosphate; and dimethylformamide, N-methylpyrrolidone, dimethyl sulfoxide, water, and the like, in view of their unlikelihood of being charged with static electricity.

A water-soluble salt may also be used when exfoliating the layered substance. In the exfoliation process, the water-soluble salt functions in the following manner: a water-soluble salt in solid form functions as a medium that accelerates exfoliation, and a water-soluble salt dissolved in a solvent acts on interlayer spaces of the layered substance and thereby accelerates exfoliation. After the exfoliation, the water-soluble salt can be easily removed through washing with water. Preferred water-soluble salts may be sodium chloride, potassium chloride, magnesium chloride, sodium sulfate, potassium sulfate, calcium sulfate, and sodium acetate, and the like.

### Coating Substance

The composite material of the present invention is a composite material in which the surface of an exfoliated layered substance is coated with a coating substance, and the coating substance is at least one substance selected from the group consisting of an antioxidant, a UV absorber, a hindered amine light stabilizer, a flame retardant, a plasticizer, a lubricant, a surfactant, a polyoxypropylene compound, a radically polymerized polymer having a hydrophilic unit and a hydrophobic unit, a process oil, and a quaternary ammonium salt compound.

### Antioxidant

Examples of the antioxidant include: phenolic antioxidants, such as hydroxyphenyl carboxylate esters such as octadecyl 3-(3,5-di-t-butyl-4-hydroxyphenyl)propionate and stearyl (3,5-di-t-butyl-4-hydroxyphenyl)propionate, thiobis(3-(3,5-di-t-butyl-4-hydroxyphenyl)propionyloxy)ethyl, triethylene glycol bis[(3-t-butyl-4-hydroxy-5-methylphenyl)propionate], 2-methyl-4,6-bis(octylthiomethyl)phenol, 2,4-dimethyl-6-(1-methylpentadecyl)phenol, an ester of a branched C7-9 mixed alcohol with (3,5-di-t-butyl-4-hydroxyphenyl)propionic acid;
phosphorus-based antioxidants, such as trisnonylphenyl phosphite, tridecyl phosphite, octyl diphenyl phosphite, di(decyl)monophenyl phosphite, di(tridecyl)pentaerythritol diphosphite, di(nonylphenyl)pentaerythritol diphosphite, tetra(tridecyl)isopropylidenediphenol diphosphite, tetra(tridecyl)-4,4'-n-butylidenebis(2-t-butyl-5-methylphenol)diphosphite, hexa(tridecyl)-1,1,3-tris(2-methyl-4-hydroxy-5-t-butylphenyl)butane triphosphite, tetrakis(2,4-di-t-butylphenyl)biphenylene diphosphonite, and 2,2'-methylenebis(4,6-di-t-butylphenyl)-octadecyl phosphite;
thioether-based antioxidants, such as dilaurylthiodipropionate, ditridecylthiodipropionate, distearylthiodipropionate, pentaerythritol tetrakis(3-dodecylthiopropionate), and 4,4-thiobis(2-t-butyl-5-methylphenol)bis-3-(dodecylthio)propionate; and aromatic amine-based antioxidants, such as phenylnaphthylamine, 4,4'-bis(dialkyl)diphenylamine, 4,4'-dimethoxydiphenylamine, 4,4'-bis(α,α-dimethylbenzyl)diphenylamine, and 4-isopropoxydiphenylamine.

In the present invention, it is preferable to use a phenolic antioxidant as the antioxidant.

UV Absorber Examples of the UV absorber include: benzotriazole-based UV absorbers, such as 2-(2-hydroxy-5-t-octylphenyl)benzotriazole, 2-(2-hydroxy-3,5-di-t-butylphenyl)-5-chlorobenzotriazole, 2-(2'-hydroxy-3'-t-butyl-5'-methylphenyl)-5-chlorobenzotriazole, 2-(2-hydroxy-3-dodecyl-5-methylphenyl)benzotriazole, 2-(2-hydroxy-3-di-t-butyl-C7-9 mixed alkoxycarbonyl ethyl phenyl)benzotriazole, 2-(2'-hydroxy-3',5'-dicumylphenyl)benzotriazole, 2,2'-methylenebis(6-(2H-benzotriazole-2-yl)-4-(1,1,3,3-tetramethylbutyl)phenol), 2-(2'-hydroxy-5'-t-butylphenyl)benzotriazole, 2-(2'-hydroxy-3',5'-di-t-butylphenyl)benzotriazole, 2-(2-hydroxy-3-secondary butyl-5-t-butylphenyl)benzotriazole, 2-(2'-hydroxy-5'-methylphenyl)benzotriazole, 2-(2'-hydroxy-3',5'-di-t-butylphenyl)benzotriazole, 3-(2H-benzotriazoyl)-5-t-butyl-4-hydroxy-benzenepropanoic acid octyl ester, 2-[2-hydroxy-3-(3,4,5,6-tetrahydrophthalimide-methyl)-5-methylphenyl]benzotriazole, and polyethylene glycol ester of 2-(2-hydroxy-3-t-butyl-5-carboxyphenyl)benzotriazole; triazine-based UV absorbers, such as 2-[4,6-bis(2,4-dimethylphenyl)-1,3,5-triazine-2-yl]-5-(octyloxy)-phenol, 2,4-bis(2,4-dimethylphenyl)-6-(2-hydroxy-4-isooctylphenyl)-1,3,5-triazine, 2-(4,6-diphenyl-1,3,5-triazine-2-yl)-5-[2-(2-ethylhexanoyloxy)ethoxy]phenol, a polymer of 1,6-hexadiamine, N,N'-bis(2,2,6,6-tetramethyl-4-piperidinyl), and 2,4-dichloro-6-(4-morpholinyl)-1,3,5-triazine, 2-(4,6-bis-(2,4-dimethylphenyl)-1,3,5-triazine-2-yl)-5-octyloxy)-phenol, 2-(4,6-diphenyl-1,3,5-triazine-2-yl)-5-[(hexyl)oxy]-phenol, 2-[4-[(2-hydroxy-3-(2'-ethyl)hexyl)oxy]-2-hydroxyphenyl]-4,6-bis(2,4-dimethylphenyl)-1 ,3,5-triazine, 2-[4-[2-hydroxy-3-dodecyloxypropyl]oxy]-2-hydroxyphenyl]-4,6-bis(2,4-dimethylphenyl )-1,3,5-triazine, and polycondensates of tris(2-hydroxy-3-methyl-4-hexyloxylphenyl)-1,3,5-triazine and 2-[4-[(2-hydroxy-3-tridecyloxypropyl)oxy]-2-hydroxyphenyl]-4,6-bis(2,4-dimethylpheny 1)-1,3,5-triazine;
benzophenone-based UV absorbers, such as benzophenone compounds that contain a benzene ring having a hydroxy group and an alkoxy group, such as 2,4-dihydroxybenzophenone, [2-hydroxy-4-(octyloxy)phenyl](phenyl)methanone, 2-hydroxy-4-methoxybenzophenone, 2-hydroxy-4-octoxybenzophenone, 2-hydroxy-4-dodecyloxybenzophenone, 2,2'-dihydroxy-4-dimethoxybenzophenone, 2,2'-dihydroxy-4,4'-dimethoxybenzophenone, 2-hydroxy-4-methoxy-5-sulfobenzophenone, and bis(2-methoxy-4-hydroxy-5-benzoylphenyl)methane;
salicylic acid-based UV absorbers, such as phenyl salicylate, p-t-butyl phenyl salicylate, and p-octyl phenyl salicylate; and
cyanoacrylate-based UV absorbers, such as 2-ethylhexyl-2-cyano-3,3'-diphenyl acrylate, and ethyl-2-cyano-3,3'-diphenyl acrylate.

In the present invention, it is preferable to use a benzophenone-based UV absorber as the UV absorber.

### Hindered Amine Light Stabilizer

Examples of the hindered amine light stabilizer include: tetrakis(1,2,2,6,6-pentamethyl-4-piperidyl)butane-1,2,3,4-tetracarboxylate, 2,2,6,6-tetramethyl-4-piperidinol fatty acid ester, a mixture of bis(1,2,2,6,6-pentamethyl-4-piperidyl) sebacate and methyl-1,2,2,6,6-pentamethyl-4-piperidyl sebacate, a tetraester of a mixed alcohol of 1,2,2,6,6-pentamethylpiperidinol and tridecyl alcohol with butanetetracarboxylic acid, a tetraester of a mixed alcohol of 2,2,6,6-tetramethylpiperidinol and tridecyl alcohol with butanetetracarboxylic acid, bis(1-octyloxy-2,2,6,6-pentamethyl-4-piperidyl) sebacate, a polyester of 1-(2-hydroxyethyl)-2,2,6,6-tetramethyl-4-piperidinol with butanedioic acid, a reaction product of 2,2,6,6-tetramethyl-4-(2-propenyloxy)piperidine with methylhydrogensiloxane, a mixture of dodecyl-3-(2,2,4,4-tetramethyl-21-oxo-7-oxa-3,20-diazodispiro(5,1,11,2)heneicosane-20-yl)propionate and tetradecyl-3-(2,2,4,4)-tetramethyl-21-oxo-7-oxa-3,20-diazodispiro(5,1,11,2)heneicosane-2 0-yl)propionate, a mixture of dodecyl-N-(2,2,6,6-tetramethylpiperidin-4-yl)-b-alaninate and tetradecyl-N-(2,2,6,6-tetramethylpiperidin-4-yl)-b-alaninate, 3-dodecyl-N-(2,2,6,6-tetramethylpiperidin-4-yl)succinimide, and 2-dodecyl-N-(1-acetyl-2,2,6,6-tetramethylpiperidin-4-yl).

### Flame Retardant

Examples of the flame retardant include: halogen-based flame retardants, such as tetrabromobisphenol A, hexabromobenzene, tris(2,3-dibromopropyl) isocyanurate, 2,2-bis(4-hydroxyethoxy-3,5-dibromophenyl)propane, decabromodiphenyl oxide, hexabromocyclodecane, tetrabromophthalic anhydride, chlorinated polyethylene, chlorinated paraffin, perchlorocyclopentadecane, chlorendic acid, and tetrachlorophthalic anhydride; and
phosphate-based flame retardants, such as ammonium phosphate, tricresyl phosphate, triethyl phosphate, tris(β-chloroethyl) phosphate, trischloroethyl phosphate, trisdichloropropyl phosphate, cresyl diphenyl phosphate, xylenyl diphenyl phosphate, phenylenebis(diphenyl phosphate), phenylene bis(phenyl cresyl phosphate), phenylene bis(dicresyl phosphate), phenylene bis(dixylenyl phosphate), bisphenol A bis(diphenyl phosphate), and bisphenol A bis(dicresyl phosphate).

In the present invention, it is preferable to use a phosphate-based flame retardant as the flame retardant.

### Plasticizer

Examples of the plasticizer include: aromatic carboxylate ester-based plasticizers, such as compounds that contain a benzene ring having one carboxylate ester, such as octyl benzoate, isononyl benzoate, isodecyl benzoate, and isotridecyl benzoate, compounds that contain a benzene ring having two carboxylate esters, such as dibutyl phthalate, diheptyl phthalate, dioctyl phthalate, diisononyl phthalate, diisodecyl phthalate, dilauryl phthalate, dicyclohexyl phthalate, dioctyl isophthalate, and dioctyl terephthalate, compounds that contain a benzene ring having three carboxylate esters, such as tris(2-ethylhexyl) trimellitate, and compounds that contain a benzene ring having four carboxylate esters, such as tetrakis(2-ethylhexyl) pyromellitate;
aliphatic dibasic acid ester-based plasticizers, such as dioctyl adipate, diisononyl adipate, diisodecyl adipate, di(butyldiglycol) adipate, dibutyl fumarate, and dioctyl sebacate;
phosphate-based plasticizers, such as triphenyl phosphate, tricresyl phosphate, trixylenyl phosphate, tri(isopropylphenyl) phosphate, triethyl phosphate, tributyl phosphate, trioctyl phosphate, tri(butoxyethyl) phosphate, and octyldiphenyl phosphate; and
polyester-based plasticizers in which ethylene glycol, diethylene glycol, triethylene glycol, 1,2-propylene glycol, 1,3-propylene glycol, 1,3-butanediol, 1,4-butanediol, 1,5-hexanediol, 1,6-hexanediol, neopentyl glycol, or the like is used as a polyhydric alcohol, oxalic acid, malonic acid, succinic acid, glutaric acid, adipic acid, pimellic acid, suberic acid, azelaic acid, sebatic acid, phthalic acid, isophthalic acid, terephthalic acid, or the like is used as a dibasic acid, and, if necessary, a monohydric alcohol or a monocarboxylic acid is used as a stopper. Note that a phosphate-based plasticizer also functions as a flame retardant.

In the present invention, it is preferable to use an aromatic carboxylate ester-based plasticizer as the plasticizer.

### Lubricant

Examples of the lubricant include: fatty acid amide-based lubricants, such as fatty acid monoamides such as laurylamide, myristylamide, stearylamide, and behenylamide, and fatty acid diamides such as ethylene bisstearylamide;
alcohol lubricants, such as glycerol monostearate and stearyl alcohol; metal soaps, such as calcium stearate, magnesium stearate, lithium stearate, and lithium hydroxystearate;
metal salts of phosphate esters, such as magnesium distearyl phosphate and magnesium stearyl phosphate;
wax-based lubricants, such as polyethylene wax, montan wax, and hardened castor oil.

In the present invention, it is preferable to use a fatty acid amide-based lubricant as the lubricant.

### Surfactant

As the surfactant, an anionic surfactant, a nonionic surfactant, a cationic surfactant, and an amphoteric surfactant may be used. In the present invention, it is preferable to use a nonionic surfactant as the surfactant.

Examples of the anionic surfactant include: a fatty acid soap, higher alcohol sulfate, olefin sulfide, higher alkyl sulfonate, α-olefin sulfonate, a sulfated fatty acid salt, a sulfonated fatty acid salt, a phosphate ester salt, a sulfate ester salt of fatty acid ester, glyceride sulfate, a sulfonic acid salt of fatty acid ester, an α-sulfo fatty acid methyl ester salt, a polyoxyalkylene alkyl ether sulfate ester salt, a polyoxyethylene alkylphenyl ether sulfate ester salt, a sulfate ester salt of fatty acid alkanolamide or its alkylene oxide adduct, sulfosuccinate, alkylbenzene sulfonate, alkylnaphthalene sulfonate, alkylbenzoimidazole sulfonate, a salt of N-acyl-N-methyltaurine, acyloxyethane sulfonate, alkoxyethane sulfonate, N-acyl-N-carboxyethyl taurine or a salt thereof, and alkyl or alkenyl aminocarboxymethyl sulfate. Note that the hydrophobic moiety of the anionic surfactants has about 8 to 22 carbon atoms.

Examples of the nonionic surfactant include: polyoxyethylene alkyl ether, polyoxyethylene alkyl phenyl ether, glycerol fatty acid ester, polyglycerol fatty acid ester, sorbitan fatty acid ester, polyoxyethylene fatty acid ester, polyoxyethylene sorbitan fatty acid ester, polyoxyethylene alkylamine, polyoxyethylene-polyoxypropylene ethylenediamine, polyoxyethylene alkylamide, polyoxyethylene castor oil, polyoxyethylene hardened castor oil, polyoxyethylene rosin ester, polyoxyethylene lanolin ether, acetylene glycol ethylene oxide adduct, copolymers of two or more alkylene oxides, such as an ethylene oxide/propylene oxide block copolymer, and alkyl glyceryl ether. When the nonionic surfactant has a polyoxyethylene group, a portion of the polyoxyethylene group may be replaced with an oxypropylene group. Note that the alkyl group of the nonionic surfactants has about 8 to 22 carbon atoms, and the acyl group of the fatty acid esters has about 10 to 22 carbon atoms.

Examples of the cationic surfactant include: an alkyl (alkenyl) trimethylammonium salt, a dialkyl (alkenyl) dimethylammonium salt, an alkyl (alkenyl) quaternary ammonium salt, and a mono- or di-alkyl (alkenyl) quaternary ammonium salt containing an ether group, an ester group, or an amide group, an alkyl (alkenyl) pyridinium salt, an alkyl (alkenyl) dimethylbenzylammonium salt, an alkyl (alkenyl) isoquinolinium salt, a dialkyl (alkenyl) morphonium salt, an alkyl (alkenyl) amine salt, benzalkonium chloride, and benzethonium chloride. Note that the alkyl group or the alkenyl group of the cationic surfactants has about 10 to 22 carbon atoms.

Examples of the amphoteric surfactant include: alkyl betaine-type amphoteric surfactants, such as alkyl dimethyl betaine and alkyl dihydroxyethyl betaine; imidazolium betaine-type amphoteric surfactants, such as N-fatty acyl-N-carboxymethyl-N-hydroxyethyl ethylenediamine salt and N-fatty acyl-N-carboxyethyl-N-hydroxyethyl ethylenediamine salt; amidopropyl betaine-type amphoteric surfactants, such as fatty acid amidopropyl betaine; amino acid-type amphoteric surfactants, such as alkylaminopropionate and alkylaminodipropionate. The fatty acyl group or the alkyl group of the amphoteric surfactants has about 8 to 22 carbon atoms.

### Radically Polymerized Polymer Having Hydrophilic Unit and Hydrophobic Unit

The radically polymerized polymer having a hydrophilic unit and a hydrophobic unit is a polymer obtained through radical polymerization of a hydrophilic monomer with a hydrophobic monomer. The hydrophilic monomer refers to a monomer whose homopolymer can be a polymer having water solubility or water dispersibility. The hydrophobic monomer refers to a monomer whose homopolymer can be a polymer having water separability.

Examples of the hydrophobic monomer include: alkyl (meth)acrylates, such as methyl (meth)acrylate, ethyl (meth)acrylate, butyl (meth)acrylate, octyl (meth) acrylate, stearyl (meth)acrylate, and fluoroalkyl (meth)acrylate; vinylaryl compounds, such as styrene, vinylnaphthalene, and vinyltoluene; vinylcycloalkyl compounds, such as vinylcyclohexane and vinylnorbornene; vinyl ether compounds, such as vinyl propyl ether, vinyl butyl ether, vinyl decyl ether, vinyl octyl ether, vinyl octadecyl ether, and vinyl phenyl ether; vinyl ester compounds, such as vinyl propionate, vinyl butyrate, vinyl decanoate, vinyl stearate, vinyl laurate, and vinyl benzoate; α-olefin compounds, such as 1-butene, isobutene, 1-octene, and 1-decene; conjugated diene compounds, such as butadiene, isoprene, and cyclopentadiene; halogenated olefin compounds, such as vinyl chloride, vinylidene chloride, vinylidene fluoride, and tetrafluoroethylene; and acrylonitrile.

Examples of the hydrophilic monomer include radically polymerizable carboxylic acid compounds, such as acrylic acid, methacrylic acid, crotonic acid, itaconic acid, itaconic acid monoester, maleic acid, maleic acid monoester, fumaric acid, and fumaric acid monoester; hydroxyalkyl (meth)acrylate compounds, such as hydroxyethyl (meth)acrylate and hydroxypropyl (meth)acrylate; dialkylaminoalkyl (meth)acrylate compounds, such as dimethylaminoethyl methacrylate and diethylaminoethyl methacrylate; morpholinoalkyl (meth)acrylate compounds, such as morpholinoethyl acrylate and morpholinoethyl methacrylate; (meth)acrylate compounds having an epoxy group, such as glycidyl (meth)acrylate; radically polymerizable sulfonic acid compounds, such as vinylsulfonic acid, allylsulfonic acid, 2-hydroxy-3-allyloxypropane sulfonic acid, styrene sulfonic acid, sulfopropyl (meth)acrylate, 2-hydroxy-3-(meth)acryloxypropane sulfonic acid, 2-(meth)acryloylamino-2,2-dimethylethane sulfonic acid, and acrylamidemethylpropane sulfonic acid; acrylamide compounds, such as (meth)acrylamide, N-ethyl(meth)acrylamide, N-methylol(meth)acrylamide, and N-hydroxyethyl acrylamide; radically polymerizable phosphonic acid compounds, such as vinylphosphonic acid and allylphosphonic acid; and vinylpyridine, N-vinylpyrrolidone, N-vinylcaprolactam, and N-vinylimidazole 4-vinylpyridine.

In the radically polymerized polymer having a hydrophilic unit and a hydrophobic unit, the hydrophilic unit and the hydrophobic unit may be present in blocks, or randomly, in the polymer. In the radically polymerized polymer having a hydrophilic unit and a hydrophobic unit, the ratio of the hydrophilic unit to the hydrophobic unit is 5:95 to 95:5, and more preferably 10:90 to 90:10, in terms of molar ratio. The radically polymerized polymer having a hydrophilic unit and a hydrophobic unit has a molecular weight of 2,000 to 100,000, and more preferably 3,000 to 50,000, in terms of mass-average molecular weight. When the radically polymerized polymer having a hydrophilic unit and a hydrophobic unit contains an acidic group such as a carboxyl group, a sulfonic acid group, or a phosphoric acid group, the acidic group may be neutralized by an alkali metal, ammonia, an organic amine, or the like.

### Polyoxypropylene Compound

The polyoxypropylene compound is a compound obtained by adding propylene oxide to alcohol, phenol, amine, carboxylic acid, or the like. Examples of the polyoxypropylene compound include compounds obtained by adding propylene oxide to alcohols such as polyoxypropylene glycol, polyoxypropylene methyl ether, polyoxypropylene butyl ether, polyoxypropylene phenyl ether, polyoxypropylene nonylphenyl ether, polyoxypropylated glycerol, polyoxypropylated trimethylolpropane, polyoxypropylated sorbitol, and polyoxypropylated sucrose, polyoxypropylated bisphenol A, polyoxypropylated ethylenediamine, and polyoxypropylene glycol fatty acid esters.

### Process Oil

The process oil refers to a hydrocarbon oil that is added to rubber or the like for the purpose of improving plasticity and flexibility. Examples of the process oil include paraffinic process oils, naphthenic process oils, aromatic process oils, and polybutene-based process oils.

### Quaternary Ammonium Salt Compound

As the quaternary ammonium salt compound, a compound represented by any of the general formulae (1) to (4) below may be used. 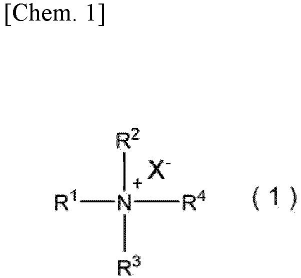 wherein R¹ represents an alkyl group having 1 to 8 carbon atoms, an alkenyl group having 2 to 8 carbon atoms, a cyclohexyl group, or a benzyl group, R² and R³ each independently represent an alkyl group having 1 to 8 carbon atoms, an alkenyl group having 2 to 8 carbon atoms, or a hydroxyalkyl group having 2 to 3 carbon atoms, R⁴ represents an alkyl group having 1 to 4 carbon atoms or a benzyl group, and X⁻ represents a counter ion. 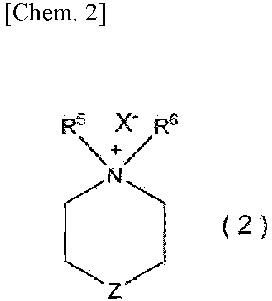 wherein R⁵ represents an alkyl group having 1 to 8 carbon atoms or a hydroxyalkyl group having 2 to 3 carbon atoms, R⁶ represents an alkyl group having 1 to 4 carbon atoms or a benzyl group, Z represents an oxygen atom, a methylene group, or a direct bond, and X⁻ represents a counter ion. 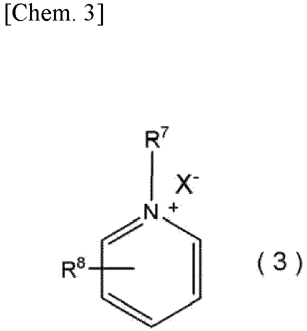 wherein R⁷ represents an alkyl group having 1 to 8 carbon atoms, R⁸ represents a hydrogen atom or a methyl group, and X⁻ represents a counter ion. 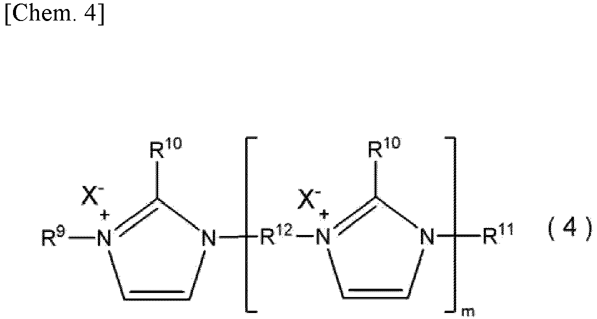 wherein R⁹ and R¹¹ each independently represent an alkyl group having 1 to 8 carbon atoms, R¹⁰ represents a hydrogen atom or a methyl group, R¹² represents an alkylene group having 1 to 14 carbon atoms, or a (poly)ether group in which alkylene groups having 2 to 4 carbon atoms are linked by an oxygen atom, m represents a number of 0 to 10, and X⁻ represents a counter ion.

In the general formula (1), R¹ represents an alkyl group having 1 to 8 carbon atoms, an alkenyl group having 2 to 8 carbon atoms, a cyclohexyl group, or a benzyl group, and R² and R³ each independently represent an alkyl group having 1 to 8 carbon atoms, an alkenyl group having 2 to 8 carbon atoms, or a hydroxyalkyl group having 2 to 3 carbon atoms. Examples of the alkyl group having 1 to 8 carbon atoms include a methyl group, an ethyl group, a propyl group, an isopropyl group, a butyl group, an isobutyl group, a t-butyl group, a pentyl group, an isopentyl group, a neopentyl group, a t-pentyl group, a hexyl group, a heptyl group, an octyl group, and a 2-ethylhexyl group. Examples of the alkenyl group having 2 to 8 carbon atoms include a vinyl group, an allyl group, a propenyl group, an isopropenyl group, a butenyl group, an isobutenyl group, a pentenyl group, an isopentenyl group, a hexenyl group, a heptenyl group, and an octenyl group. Examples of the hydroxyalkyl group having 2 to 3 carbon atoms include a 2-hydroxyethyl group, a 2-hydroxypropyl group, and a 3-hydroxypropyl group. R⁴ represents an alkyl group having 1 to 4 carbon atoms or a benzyl group. Examples of the alkyl group having 1 to 4 carbon atoms include a methyl group, an ethyl group, a propyl group, an isopropyl group, a butyl group, an isobutyl group, and a t-butyl group.

In the general formula (1), X⁻ represents a counter ion. Examples of the counter ion represented by X⁻ include halogen ions, such as a chlorine ion (Cl⁻), a bromine ion (Br⁻), an iodine ion (Γ), and a fluorine ion (F⁻); inorganic ions, such as a perchlorate ion (ClO₄⁻), a chlorate ion (ClO₃⁻), a nitrate ion (NO₃⁻), a nitrite ion (NO₂⁻), a thiocyanate ion (SCN⁻), a hexafluorophosphate ion (PF₆⁻), a hexafluoroantimonate ion (SbF₆⁻), an tetrachloroaluminate ion (AlCl₄⁻), and a tetrafluoroborate ion (BF₄⁻); carboxylate ions, such as an acetate ion (CH₃CO₂⁻) and a trifluoroacetate ion (CF₃CO₂⁻); sulfonate ions, such as a methanesulfonate ion (CH₃SO₃⁻), a benzenesulfonate ion, a toluenesulfonate ion, a trifluoromethanesulfonate ion, and a vinyl sulfonate ion; alkyl sulfate ions, such as a methyl sulfate ion, an ethyl sulfate ion, and a butyl sulfate ion; alkyl phosphate ions, such as a methyl phosphate ion, an ethyl phosphate ion, and a butyl phosphate ion; imide ions, such as a bis(trifluoromethanesulfonyl)imide ion ((CF₃SO₂)₂N⁻), a bis(perfluorobutanesulfonyl)imide ion ((C₄F₉SO₂)₂N⁻), and a dicyanimide ion ((CN)₂N⁻).

In the general formula (2), R⁵ represents an alkyl group having 1 to 8 carbon atoms or a hydroxyalkyl group having 2 to 3 carbon atoms. Examples of the alkyl group having 1 to 8 carbon atoms include the alkyl groups having 1 to 8 carbon atoms that have been listed as examples of R¹ to R³ of the general formula (1). Examples of the hydroxyalkyl group having 2 to 3 carbon atoms include a 2-hydroxyethyl group, a 2-hydroxypropyl group, and a 3-hydroxypropyl group. R⁶ represents an alkyl group having 1 to 4 carbon atoms or a benzyl group, and examples of the alkyl group having 1 to 4 carbon atoms include a methyl group, an ethyl group, a propyl group, an isopropyl group, a butyl group, an isobutyl group, and a t-butyl group.

In the general formula (2), Z represents an oxygen atom, a methylene group, or a direct bond. Therefore, the compound represented by the general formula (2) is a morpholinium compound if Z represents an oxygen atom, a piperidinium compound if Z represents a methylene group, and a pyrrolidinium compound if Z represents a direct bond.

In the general formula (2), X⁻ represents a counter ion. The counter ions that have been listed as examples in the description of the general formula (1) may be used as the counter ion represented by X⁻.

In the general formula (3), R⁷ represents an alkyl group having 1 to 8 carbon atoms or a hydroxyalkyl group having 2 to 3 carbon atoms, and R⁸ represents a hydrogen atom or a methyl group. Examples of the alkyl group having 1 to 8 carbon atoms include the alkyl groups having 1 to 8 carbon atoms that have been listed as examples of R¹ to R³ of the general formula (1). When R⁸ represents a methyl group, the methyl group may be bonded to a pyridine ring at any of the ortho-position, meta-position, and para-position with respect to R⁷.

In the general formula (3), X⁻ represents a counter ion. The counter ions that have been listed as examples in the description of the general formula (1) may be used as the counter ion represented by X⁻.

In the general formula (4), R⁹ and R¹¹ each independently represent an alkyl group having 1 to 8 carbon atoms, R¹⁰ represents a hydrogen atom or a methyl group. Examples of the alkyl group having 1 to 8 carbon atoms include the alkyl groups having 1 to 8 carbon atoms that have been listed as examples of R¹ to R³ of the general formula (1).

R¹² is an alkylene group having 1 to 10 carbon atoms, or a (poly)ether group in which alkylene groups having 2 to 4 carbon atoms are linked by an oxygen atom. Examples of the alkylene group having 1 to 10 carbon atoms include a methylene group, an ethylene group, a propane-1,3-diyl group, a butane-1,4-diyl group, a pentane-1,5-diyl group, a hexane-1,6-diyl group, a heptane-1,7-diyl group, an octane-1,8-diyl group, a nonane-1,9-diyl group, and a decane-1,10-diyl group. The (poly)ether group in which alkylene groups having 2 to 4 carbon atoms are linked by an oxygen atom is a group represented by the general formula (5) below. 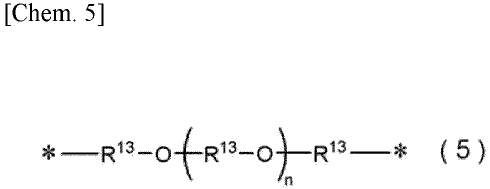 wherein R¹³ represents an alkylene group having 2 to 4 carbon atoms, n represents a number of 0 to 10, and * represents a binding site.

In the general formula (5), R¹³ represents an alkylene group having 2 to 4 carbon atoms. Examples of the alkylene group having 2 to 4 carbon atoms include an ethylene group, a propane-1,3-diyl group, and a butane-1,4-diyl group. n represents a number of 0 to 10, and * represents a binding site.

In the general formula (4), m represents a number of 0 to 10, and X⁻ represents a counter ion. The counter ions listed as examples in the description of the general formula (1) may be used as the counter ion represented by X⁻.

### Composite Material of the Present Invention

In the composite material of the present invention, the surface of the exfoliated layered substance is coated with the coating substance. In the present invention, the coating substance may coat at least a portion of the surface of the exfoliated layered substance, or the entire surface thereof, but it is preferable that the coating substance coats at least a larger fraction of the surface of the exfoliated layered substance. Furthermore, the coating substance may coat the surface of the exfoliated layered substance continuously or discontinuously.

In the composite material of the present invention, the amount of coating substance is 0.1 to 100 parts by mass with respect to 100 parts by mass of the exfoliated layered substance. If the amount of coating substance is less than 0.1 parts by mass, coating with the coating substance may be insufficient. On the other hand, if the amount of coating substance is greater than 100 parts by mass, the effect obtained by the increase in amount is not proportional to the amount used, and, moreover, when the composite material of the present invention is used added to a resin or the like, the properties of the resin or the like may be adversely affected. The amount of coating substance with respect to 100 parts by mass of the exfoliated layered substance is preferably 0.2 to 70 parts by mass, more preferably 0.5 to 60 parts by mass, and most preferably 1 to 50 parts by mass.

Examples of the method for coating the exfoliated layered substance with the coating substance include the following methods: a method in which the coating substance is added dropwise to the exfoliated layered substance under stirring; a method in which a vapor of the coating substance is sprayed onto the exfoliated layered substance; a method in which a mist of the coating substance is sprayed onto the exfoliated layered substance; and a method in which the exfoliated layered substance is dipped in a solution of the coating substance. Since the exfoliated layered substance is likely to aggregate to form secondary particles, in order to coat the exfoliated layered substance with the coating substance, it is necessary to perform the coating operation while disintegrating the secondary particles of the exfoliated layered substance particles. In view of the ease of coating while disintegrating the secondary particles, the method (hereinafter referred to as the "dipping method") in which the exfoliated layered substance is dipped in a solution of the coating substance is preferably used as the method for coating the exfoliated layered substance with the coating substance.

In the dipping method, simply dipping the exfoliated layered substance in the solution of the coating substance is insufficient to disintegrate the secondary particles of the exfoliated layered substance, and the solution in which the exfoliated layered substance is dipped needs to be subjected to a shear force, ultrasonic vibrations, cavitation, or the like with use of a dispersion apparatus. Examples of the dispersion apparatus that can be used for this purpose include high-speed rotary shearing type stirring machines, such as a homomixer; stirred media mills, such as a sand mill, an attritor, and a bead mill; container-driven mills that use balls or rods as the media, such as a rotary mill, a vibration mill, and a planetary mill; a colloid mill, a high-pressure emulsifying machine, an ultrasonic emulsifying machine, and the like. Examples of the high-pressure emulsifying machine include a flow-through-type high-pressure emulsifying machine and a collision-type high-pressure emulsifying machine. An example of the form of the flow-through system of the flow-through-type high-pressure emulsifying machine is a single-nozzle form. Examples of the form of the collision system of the collision-type high-pressure emulsifying machine include a form in which a liquid containing the raw material is made to collide with a flat surface of a valve or the like, or a spherical surface of a ball or the like, and a form in which liquids containing the raw material are made to collide with each other. Note that, if a strong shear force is applied to the exfoliated layered substance, the number of layers, the thickness, the particle size, and the like of the exfoliated layered substance may become smaller than those before coating.

The dipping method may be performed by adding the exfoliated layered substance to a solution of the coating substance and then disintegrating the secondary particles of the exfoliated layered substance, or by adding the exfoliated layered substance to a solvent, disintegrating the secondary particles of the exfoliated layered substance, and then dissolving the coating substance in the solution. Note that, in the case where the coating substance has a low boiling point and can be removed by heating, reducing the pressure, or the like, the coating substance may be used as-is without using a solution of the coating substance. The solvent used for the solution of the coating substance can be selected with consideration given to the solubility of the coating substance, the ease of removal after coating with the coating substance has been completed, the safety (toxicity, flammability, chargeability, etc.), and the like. Examples of the solvent used in the dipping method include alcoholic solvents, such as methanol, ethanol, isopropanol, and methoxyethanol; ketonic solvents, such as acetone and methyl ethyl ketone; and water. The ratio between the exfoliated layered substance and the solution of the coating substance varies depending on the viscosity of the solution of the coating substance and the pulverization apparatus, but it is preferable that the amount of the solution of the coating substance is about 200 to 5,000 parts by mass with respect to 100 parts by mass of the exfoliated layered substance.

After that, according to the dipping method, the exfoliated layered substance is dipped in the solution of the coating substance, the secondary particles of the exfoliated layered substance are disintegrated, and then, the solvent or an excess of the coating substance is removed, and a composite substance of the present invention is thus obtained. Note that, after the disintegration of the secondary particles of the exfoliated layered substance, it is also possible to remove a portion of the solution of the coating substance or the excess of the coating substance through filtration, centrifugation, or the like and then remove the remainder, if necessary.

There is no particular limitation on the method for removing the solvent or the excess of the coating substance, and a method such as heat drying, vacuum drying, spray drying, or freeze drying, or a combination of these methods can be used. The obtained composite material of the present invention may be pulverized or granulated, if necessary.

In the composite material of the present invention, the surface of the exfoliated layered substance is coated with the coating substance. Therefore, aggregation of the exfoliated layered substance is prevented, and hence the dispersibility in a base material is significantly improved. Thus, the effect of the exfoliated layered substance of improving the properties of the base material can be achieved, or more specifically, for example, conductivity, heat dissipation properties, mechanical properties (impact resistance, flexural strength, compression strength, etc.), and other properties can be improved. The composite material of the present invention can be favorably used in applications such as an additive for a resin such as a synthetic resin, an elastomer, a paint, or the like; a conductive additive for a battery electrode; and the like.

A resin composition of the present invention contains the composite material of the present invention and a synthetic resin. Examples of the synthetic resin that can be used in the resin composition of the present invention include a phenolic resin, an epoxy resin, a melamine resin, a urea resin, an alkyd resin, a PET resin, a PBT resin, a polycarbonate resin, a polyacetal resin, a modified polyphenylene ether resin, polyurethane, polyimide, polyimideamide, polyetherimide, polyethylene, polypropylene, polyvinyl chloride, polystyrene, polyvinyl acetate, a fluororesin, an ABS resin, an AS resin, and an acrylic resin. The amount of composite material of the present invention added varies depending on the type of the resin and the required properties, but it is preferable that the amount of composite material of the present invention is 1 to 150 parts by mass, and more preferably 2 to 100 parts by mass, with respect to 100 parts by mass of the synthetic resin.

### Examples

Hereinafter, the present invention will be described in greater detail using examples and comparative examples. However, the present invention is not limited to the examples and the like given below. Unless otherwise stated, the terms "part" and "%" used in the examples mean "part by mass" and "% by mass", respectively.

### Production Example 1

An exfoliated layered substance A1 was prepared from natural graphite in accordance with Example 1 of WO 2013/172350. Specifically, 74 parts of 1-butyl-3-methylimidazolium hexafluorophosphate and 26 parts of polyethylene glycol (trade name: Polyethylene Glycol 20000 manufactured by FUJIFILM Wako Pure Chemical Corporation) were mixed, and dissolved through heating, and 10 parts of natural graphite (manufactured by FUJIFILM Wako Pure Chemical Corporation) was dispersed in the solution. Then, 0.6 g of this dispersion was collected into a 0.5-cm³ vial, the vial was closed with a cap, and then, the dispersion was irradiated with microwaves of 2,450 MHz at 170°C for 30 minutes using a microwave synthesizer (Initiator+ manufactured by Biotage Japan Ltd.).

After that, the dispersion was washed with acetone, followed by filtration and then heat drying in an oven, and an exfoliated layered substance A1 derived from natural graphite was thus obtained. The exfoliated layered substance A1 had an average thickness of 123 nm and an average area of 11.6 µm².

### Production Example 2

Similar operations to those of Production Example 1 were performed, except that natural graphite was replaced with expanded graphite (trade name: EC1500 manufactured by Ito Graphite Co., Ltd.), and an exfoliated layered substance A2 derived from expanded graphite was thus obtained. The exfoliated layered substance A2 had an average thickness of 30 nm and an average area of 1.4 µm².

### Production Example 3

Similar operations to those of Production Example 1 were performed, except that natural graphite was replaced with boron nitride (manufactured by Aldrich), and an exfoliated layered substance A3 derived from boron nitride was thus obtained. The exfoliated layered substance A3 had an average thickness of 183 nm and an average area of 10.3 µm².

### Coating Substances

B1: Octadecyl 3-(3,5-di-t-butyl-4-hydroxyphenyl)propionate (an antioxidant, trade name: ADK STAB AO-50 manufactured by ADEKA Corporation)
B2: [2-Hydroxy-4-(octyloxy)phenyl](phenyl)methanone (a UV absorber, trade name: ADK STAB 1413 manufactured by ADEKA Corporation)
B3: Tetrakis(1,2,2,6,6-pentamethyl-4-piperidyl)butane-1,2,3,4-tetracarboxylate (a hindered amine light stabilizer, trade name: ADK STAB LA-52 manufactured by ADEKA Corporation)
B4: Phosphate-based flame retardant (trade name: ADK STAB PFR manufactured by ADEKA Corporation)
B5: Tris(2-ethylhexyl)trimellitate (a plasticizer, trade name: ADK CIZER C-8 manufactured by ADEKA Corporation)
B6: Ethylene bisstearylamide (a lubricant, manufactured by FUJIFILM Wako Pure Chemical Corporation)
B7: Ethylene oxide/propylene oxide block copolymer (a surfactant, trade name: ADEKA Pluronic F-88 manufactured by ADEKA Corporation)
B8: Polyoxypropylated glycerol (a polyoxypropylene compound, number-average molecular weight: 4,000, trade name: ADEKA POLYETHER G-4000 manufactured by ADEKA Corporation)
B9: Paraffinic process oil (a process oil, trade name: SUNPAR 110 manufactured by Japan Sun Oil Company, Ltd.)
B10: 1-Butyl-3-methylimidazolium bis(trifluoromethanesulfonyl) imide
C1: Polyvinyl alcohol (trade name: PVA 217 manufactured by Kuraray Co., Ltd.)

### Production Method

The exfoliated layered substances, the coating substances, and solvents were used in combinations shown in Table 1. With use of a bead mill (trade name: UAM-015 manufactured by Kotobuki Industries Co., Ltd.), the exfoliated layered substance was dipped in a solution of the coating substance, and the secondary particles of the exfoliated layered substance were disintegrated. Then, the solvent was removed through heat and vacuum drying. In this manner, composite materials of Examples 1 to 16 and Comparative Examples 1 and 2 were produced. Note that, in Table 1, numbers in parentheses represent mass ratios, and MEK in the solvent section means methyl ethyl ketone. Note that water was used as the solvent in Comparative Examples 1 and 2 because polyvinyl alcohol used as the coating substance was unlikely to dissolve in methyl ethyl ketone.

**Table 1**

| | Exfoliated layered substance | Coating substance | Solvent |
|---|---|---|---|
| Example 1 | A-1 (70) | B-1 (30) | MEK (1400) |
| Example 2 | A-1 (70) | B-2 (30) | MEK (1400) |
| Example 3 | A-1 (70) | B-3 (30) | MEK (1400) |
| Example 4 | A-1 (70) | B-4 (30) | MEK (1400) |
| Example 5 | A-1 (70) | B-5 (30) | MEK (1400) |
| Example 6 | A-1 (95) | B-5 (5) | MEK (1400) |
| Example 7 | A-1 (70) | B-6 (30) | MEK (1400) |
| Example 8 | A-1 (70) | B-7 (30) | MEK (1400) |
| Example 9 | A-1 (70) | B-8 (30) | MEK (1400) |
| Example 10 | A-1 (70) | B-9 (30) | MEK (1400) |
| Example 11 | A-1 (70) | B-10 (30) | MEK (1400) |
| Example 12 | A-1 (95) | B-10 (5) | MEK (1400) |
| Example 13 | A-2 (70) | B-5 (30) | MEK (1400) |
| Example 14 | A-2 (70) | B-10 (30) | MEK (1400) |
| Example 15 | A-3 (70) | B-5 (30) | MEK (1400) |
| Example 16 | A-3 (70) | B-10 (30) | MEK (1400) |
| Comparative Example 1 | A-1 (70) | C-1 (30) | Water (1400) |
| Comparative Example 2 | A-3 (70) | C-1 (30) | Water (1400) |

### Evaluation 1 of Resins

100 parts of polypropylene (homopolymer, melt flow rate: 8 g/10 min) and 2 parts of the composite material or the exfoliated layered substance shown in Table 2 were kneaded at 230°C using a twin-screw kneader and extruded to prepare a resin strand having a thickness of 4 mm.

### Evaluation of Dispersibility

The obtained resin strand was cut using a microtome. A center portion of the cross section was imaged using a microscope, and the number of particles per area of 300 µm × 300 µm and the percentage of aggregates were measured using a piece of image analysis software. Note that the percentage of aggregates was the percentage (%) of the total area of aggregates with respect to the total area of particles, where particles having an area of 40 µm² or greater were regarded as aggregates. The greater the number of particles, the better the dispersibility. The greater the percentage of aggregates, the higher the proportion of aggregates. Table 2 shows the results.

**Table 2**

| | Composite material or exfoliated layered substance | Number of particles | Percentage of agsregates(%) |
|---|---|---|---|
| Example 17 | Example 5 | 1516 | 0.0 |
| Example 18 | Example 9 | 911 | 0.0 |
| Example 19 | Example 10 | 947 | 0.0 |
| Example 20 | Example 12 | 1097 | 0.0 |
| Example 21 | Example 13 | 792 | 5.6 |
| Comparative Example 3 | A1 | 486 | 24.7 |
| Comparative Example 4 | A2 | 139 | 75.3 |
| Comparative Example 5 | Comparative Example 1 | 677 | 5.6 |

Comparative Example 3 was an example in which the exfoliated layered substance A1 was used. Examples 17 to 20 and Comparative Example 5 were examples in which the composite materials derived from the exfoliated layered substance A1 were used. Comparative Example 4 was an example in which the exfoliated layered substance A2 was used. Example 21 was an example in which the composite material derived from the exfoliated layered substance A2 was used. The composite materials of Examples 17 to 21 had improved dispersibility, compared with the exfoliated layered substances that were not coated with a coating substance, of Comparative Examples 3 and 4. Comparative Example 5 had improved dispersibility compared with the exfoliated layered substance of Comparative Example 3, which was not coated with a coating substance, but the effect was such that the dispersibility was less sufficient compared with Examples 17 to 20.

### Evaluation 2 of Resins

100 parts of polycarbonate (homopolymer, melt flow rate: 8 g/10 min) and 30 parts of the composite material or the exfoliated layered substance shown in Table 3 were kneaded at 260°C using a twin-screw kneader and extruded to prepare a resin strand having a thickness of 4 mm.

### Evaluation of Dispersibility

The number of particles per area of 300 µm × 300 µm and the percentage of aggregates were measured in a similar manner to that of the evaluation of dispersibility described in Evaluation 1 of Resins. Table 3 shows the results.

### Evaluation of Electrical Properties

The resin strand was pressed at 250°C and a pressure of 5 MPa for 5 minutes to prepare a sheet with a thickness of 3 mm. The surface resistance value of this sheet was measured using a four-probe method in conformity with JIS K7194 (Testing method for resistivity of conductive plastics with a four-point probe array). Table 3 shows the results.

**Table 3**

| | Composite material or exfoliated layered substance | Number of particles | Percentage of aggregates (%) | Surface resistivity (Ω/□) |
|---|---|---|---|---|
| Example 22 | Example 5 | 8021 | 0.0 | 1.4×10⁶ |
| Example 23 | Example 12 | 8593 | 0.0 | 8.1×10⁵ |
| Comparative Example 6 | A1 | 6484 | 17.3 | 9.9×10⁷ |

The composite materials of Examples 22 and 23 had improved dispersibility, compared with the exfoliated layered substance that was not coated with a coating substance, of Comparative Example 6. The composite materials of Examples 22 and 23 provided a lower surface resistivity than the exfoliated layered substance of Comparative Example 6, and this is presumed to be due to the effect of dispersibility.

### Evaluation 3 of Resins

20 parts by mass of the composite material or the exfoliated layered substance shown in Table 4 below, 100 parts by mass of a bisphenol A type epoxy resin (trade name: ADEKA RESIN EP4100E manufactured by ADEKA Corporation), and 0.5 parts by mass of an imidazole catalyst (1-benzyl-2-methylimidazole) were mixed using a planetary stirring and defoaming apparatus. The resulting mixture was heated at a temperature of 160°C and a pressure of 5 MPa for one hour and then cured by hot pressing, and a sheet with a thickness of 3 mm was thus prepared. This sheet was cut into a square with sides of 50 mm long and used as a test piece.

### Evaluation of Dispersibility

The resin sheet was cut using a microtome. A center portion of the cross section was imaged using a microscope, and the number of particles per area of 300 µm × 300 µm and the percentage of aggregates were measured using a piece of image analysis software. Note that the percentage of aggregates was the percentage (%) of the total area of aggregates with respect to the total area of particles, where particles having an area of 50 µm² or greater were regarded as aggregates. The greater the number of particles, the better the dispersibility. The greater the percentage of aggregates, the higher the proportion of aggregates. Table 4 shows the results.

### Evaluation of Thermal Properties

The thermal conductivity was measured using a hot wire method in conformity with ASTM D7984-16.

**Table 4**

| | Composite material or exfoliated layered substance | Dispersibility | | Thermal properties |
|---|---|---|---|---|
| | | Number of particles | Percentage of aggregates(%) | Thermal conductivity (W/m×K) |
| Example 24 | Example 15 | 1908 | 0.6 | 0.762 |
| Example 25 | Example 16 | 2002 | 0.4 | 0.781 |
| Comparative Example 7 | A3 | 1544 | 7.9 | 0.703 |
| Comparative Example 8 | Comparative Example 2 | 1578 | 5.2 | 0.725 |

In Comparative Example 7, the exfoliated layered substance A3 was used. In Examples 24 and 25, the composite materials obtained by coating the exfoliated layered substance A3 with a plasticizer or an ionic liquid were used. In Comparative Example 7, the composite material obtained by coating the exfoliated layered substance A3 with polyvinyl alcohol, which was a homopolymer, was used. The composite materials of Examples 24 and 25 had improved thermal conductivity, compared with the exfoliated layered substance A3 of Comparative Example 7 and the composite material of Comparative Example 8. It is considered that this is because the dispersibility of the exfoliated layered substances in the resin sheets was improved.

## Claims

1. A composite material comprising: an exfoliated layered substance; and a coating substance coating a surface of the exfoliated layered substance,
wherein the coating substance is at least one substance selected from the group consisting of an antioxidant, a UV absorber, a hindered amine light stabilizer, a flame retardant, a plasticizer, a lubricant, a surfactant, a polyoxypropylene compound, a radically polymerized polymer having a hydrophilic unit and a hydrophobic unit, a process oil, and a quaternary ammonium salt compound, and
the coating substance is contained in an amount of 0.1 to 100 parts by mass with respect to 100 parts by mass of the exfoliated layered substance.

2. The composite material according to claim 1,
wherein the exfoliated layered substance has an average thickness of 1,200 nm or less, and the exfoliated layered substance has an average area of 0.1 to 500 µm².

3. The composite material according to claim 1 or 2,
wherein the exfoliated layered substance has an average thickness of 3 to 200 nm.

4. The composite material according to any one of claims 1 to 3,
wherein the exfoliated layered substance has an average area of 1.0 to 30 µm².

5. The composite material according to any one of claims 1 to 4,
wherein the exfoliated layered substance is derived from a graphite or a boron nitride.

6. The composite material according to any one of claims 1 to 5,
wherein the coating substance is an antioxidant, and the antioxidant is a phenolic antioxidant.

7. The composite material according to claim 6,
wherein the antioxidant is a hydroxyphenyl carboxylate ester.

8. The composite material according to any one of claims 1 to 5,
wherein the coating substance is a UV absorber, and the UV absorber is a benzophenone-based UV absorber.

9. The composite material according to claim 8,
wherein the UV absorber the benzophenone-based UV absorber contains a benzene ring having a hydroxy group and an alkoxy group.

10. The composite material according to any one of claims 1 to 5,
wherein the coating substance is a hindered amine light stabilizer.

11. The composite material according to any one of claims 1 to 5,
wherein the coating substance is a flame retardant, and the flame retardant is a phosphate-based flame retardant.

12. The composite material according to any one of claims 1 to 5,
wherein the coating substance is a plasticizer, and the plasticizer is an aromatic carboxylate ester-based plasticizer.

13. The composite material according to claim 12,
wherein the aromatic carboxylate ester-based plasticizer contains a benzene ring having three carboxylate esters.

14. The composite material according to any one of claims 1 to 5,
wherein the coating substance is a lubricant, and the lubricant is a fatty acid amide-based lubricant.

15. The composite material according to claim 14,
wherein the fatty acid amide-based lubricant is a fatty acid diamide.

16. The composite material according to any one of claims 1 to 5,
wherein the coating substance is a surfactant, and the surfactant is a nonionic surfactant.

17. The composite material according to claim 16,
wherein the nonionic surfactant is a copolymer of two or more different alkylene oxides.

18. The composite material according to any one of claims 1 to 5,
wherein the coating substance is a polyoxypropylene compound.

19. The composite material according to claim 18,
wherein the polyoxypropylene compound is a compound obtained by adding propylene oxide to alcohol.

20. The composite material according to any one of claims 1 to 5,
wherein the coating substance is a radically polymerized polymer having a hydrophilic unit and a hydrophobic unit.

21. The composite material according to any one of claims 1 to 5,
wherein the coating substance is a process oil.

22. The composite material according to any one of claims 1 to 5,
wherein the coating substance is a quaternary ammonium salt compound, and the quaternary ammonium salt compound is represented by the general formula (4) below: 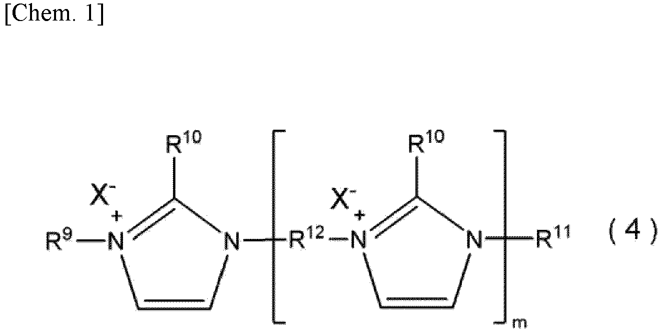 wherein R⁹ and R¹¹ each independently represent an alkyl group having 1 to 8 carbon atoms, R¹⁰ represents a hydrogen atom or a methyl group, R¹² represents an alkylene group having 1 to 14 carbon atoms, or a (poly)ether group in which alkylene groups having 2 to 4 carbon atoms are linked by an oxygen atom, m represents a number of 0 to 10, and X⁻ represents a counter ion.

23. A resin composition comprising the composite material according to any one of claims 1 to 22 and a synthetic resin.
